# EUROPEAN PATENT APPLICATION

(11) **EP 2 202 120 A1**
(43) Date of publication of application: **30.06.2010**
(21) Application number: 08254156.6
(22) Date of filing: 24.12.2008
(51) Int. Cl.: B60R 21/235

(54) **An airbag**

(71) Applicant: Autoliv Development AB, 447 83 Vårgårda (SE)
(72) Inventor: Hirsch, Brita, Macclesfield Cheshire, SK11 8AH (GB)
(74) Representative: Parry, Simon James

(57) **Abstract**

An airbag is disclosed which is made from two superimposed layers (1,12) of flexible material, said layers being substantially polygonal in shape and being secured to one another by a plurality of edge-seams (16). Each edge-seam (16) comprises a lap-joint formed between an edge-region of one of said layers (12) and a respective edge-flap (14) of the other layer (1) folded over said edge-region. The airbag is configured such that adjacent edge-flaps (14) do not overlap with one another, thereby minimising the thickness of said flexible material in the region of each corner (17) of the polygonal bag.

## Description

The present invention relates to an airbag of a type suitable for inflation in order to provide protection to an occupant of a motor vehicle in the event of accident involving the motor vehicle.

It is widely known to provide inflatable airbags within motor vehicles for inflation in the event of the motor vehicle being involved in a crash, thereby providing protection for an occupant of the motor vehicle. Such airbags are initially provided in the form of a tightly folded and/or rolled package provided within an airbag module mounted within the motor vehicle. Conventionally, airbags of this general type are manufactured from woven fabric, and typically comprise two or more layers of fabric which are interconnected by seams. In some cases, the seams are created via a so-called one-piece-weaving technique in which the yarns of one layer are interwoven with the yarns of the other layer, as both layers are woven, to create integral seams.

However, it has also been proposed to manufacture airbags from thin-film material such as cross-ply laminate material. Materials of this type can offer advantages over more traditional woven fabrics, as they are generally lighter, and have improved levels of impermeability to the gases used to inflate the airbags. Typically, layers of thin-film material are secured to one another to create an airbag via the use of adhesive to create interconnecting seams. However, previously-proposed seam configurations of this type have involved the use of multiple layers of film material in overlapping relationship, which adds to the weight of the resulting airbag, and also increases the thickness of the uninflated airbag in the regions of the seams, which can make it more difficult to fold the airbag into a sufficiently small package for inclusion in an airbag module.

It is an object of the present invention to provide an improved airbag suitable for use as a motor vehicle safety device.

According to the present invention, there is provided an airbag made from two superimposed layers of flexible material, said layers being substantially polygonal in shape and being secured to one another by a plurality of edge-seams, each said seam comprising a lap-joint formed between an edge-region of one of said layers and a respective edge-flap of the other layer folded over said edge-region, wherein adjacent edge-flaps do not overlap.

Preferably, a gap is provided between adjacent said edge-flaps.

Alternatively, adjacent edge-flaps substantially abut one another.

Conveniently, adjacent edge-seams do not overlap.

Advantageously, said edge-flaps are all provided on the same said layer. However, it should be appreciated that it is also possible to provide some edge-flaps on one layer, and some edge-flaps on the other layer.

Preferably, said flexible material comprises a plastic film.

Conveniently, said flexible material comprises a cross-ply laminate.

Advantageously, said flexible material comprises polyamide fibres within a polyurethane dispersion.

Preferably each said edge-seam comprises an adhesive bond formed between said edge-regions and said edge-flaps.

Advantageously, said adhesive bond is formed by a strip of adhesive tape.

Conveniently, each said edge-seam is formed by the application of heat and/or pressure to said adhesive.

Preferably, each said seam is formed ultrasonically.

Advantageously, each said layer is formed from a separate polygonal sheet of said flexible material, there being a respective said edge-seam interconnecting said two sheets along substantially aligned edges thereof.

Alternatively, said layers are both formed from a single sheet of flexible material, said sheet being folded about a fold line to superimpose said layers, said fold line forming one edge of the airbag, and the two layers being interconnected along each other edge by a respective said edge-seam.

So that the invention may be more readily understood, and so that further features thereof may be appreciated, embodiments of the invention will now be described by way of example with reference to the accompanying drawings in which:
Figure 1 shows a rear panel of an airbag in accordance with the present invention;
Figure 2 shows a front panel of the airbag;
Figure 3 shows the front panel superimposed on the rear panel;
Figure 4 shows the front and rear panels secured to one another by a series of folded over edge-flaps provided on the rear panel, to define the airbag;
Figure 5 is a cross-sectional view, taken along line A-A in figure 4, showing the construction of an edge-seam;
Figure 6 is an enlarged view of a corner of the airbag shown in figure 4, showing the relationship between adjacent edge-seams;
Figure 7 is a view corresponding generally to that of figure 6, but illustrating an alternative embodiment;
Figure 8 shows a sheet of material cut to define both a rear-panel and a front panel of an airbag in accordance with a further embodiment of the present invention;
Figure 9 shows the sheet of figure 8 in a folded configuration in which the front panel is superimposed on the rear panel; and
Figure 10 shows the front and rear panels secured to one another by a series of folded over edge-flaps, to define an airbag of largely similar configuration to that illustrated in figure 4.

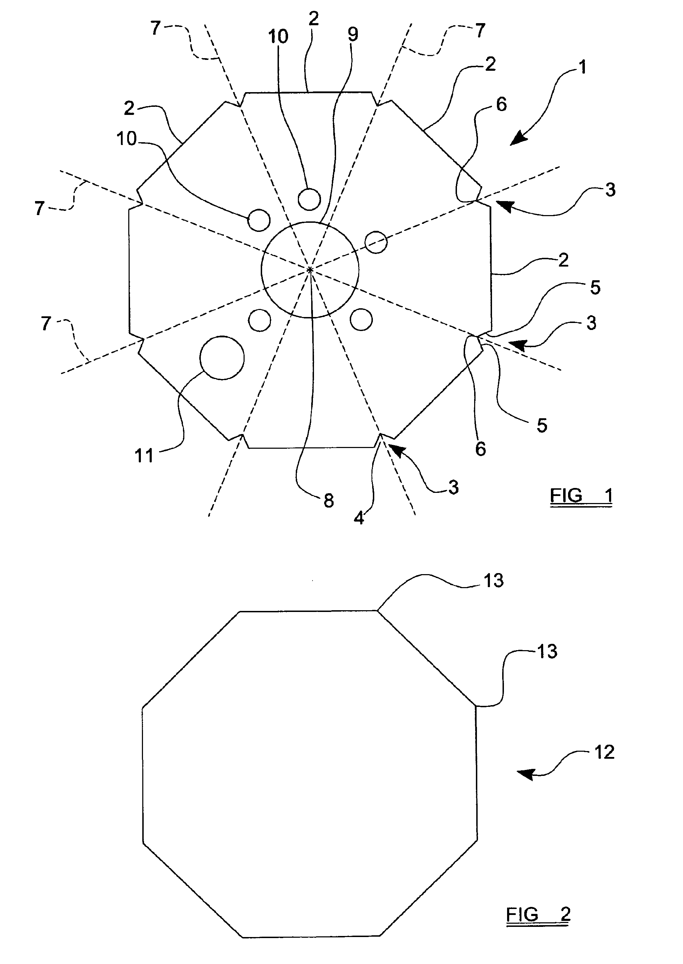

Referring initially to figure 1, there is illustrated a rear-panel-layer 1 which is formed from a single sheet of flexible material. The flexible material is preferably a thin plastic film, and most preferably comprises a web of polyamide fibres held within a matrix of polyurethane dispersion, thereby forming a cross-ply laminate.

As illustrated, the layer 1 takes the shape of a substantially regular octagon, and thus defines a plurality of straight side edges 2 arranged around the periphery of the fabric. As will be appreciated, given the substantially regular octagonal shape of the fabric panel, adjacent side edges 2 lie at an angle of 135° to one another.

At each corner 3 of the octagonal panel 1 there is formed a small re-entrant recess 4. Each recess 4 is thus located between adjacent sides edges 2, and is defined by a pair of substantially straight edges 5, the two edges 5 of each recess 4 making an angle of approximately 90° to one another. Each recess 4 thus defines an inwardly directed apex 6 lying on an axis 7 serving to interconnect opposing corners of the octagonal panel.

As will be appreciated, because the panel 1 takes the shape of a substantially regular octagon, all of the axes 7 intersect at a common point 8 defining the geometric centre of the panel. A gas inlet aperture 9 is formed through the panel 1 in the central region of the panel, the inlet aperture being centred on the geometric centre point 8 of the panel and being configured to receive a gas generator in a manner known *per se*. As illustrated, a number of mounting apertures 10 may also be provided through the panel 1 at positions around the central inlet aperture 9 in order to allow the panel 1 to be mounted to a gas generator in a manner known *per se*. One or more vent apertures 11 may also be provided through the panel 1 in a manner known *per se*.

It should be noted that the panel 1 illustrated in figure 1 is preferably cut from a sheet of cross-ply laminate material. For example, it is envisaged that the panel, and all of the features indicated above, could be cut either by laser or ultrasonically.

Figure 2 illustrates a further layer (12) of flexible material, which is preferably cut from the same material as the layer 1. However, the further layer 12 has a much simpler form, taking the shape of a regular octagon with conventional, outwardly directed corners 13. It should be appreciated, however, that the further layer 12 is slightly smaller than the layer 1, as will become clear hereinafter.

The layer 1 illustrated in figure 1 effectively defines a rear panel for an airbag, whilst the further layer 12 illustrated in figure 2 effectively defines a front panel to the airbag (i.e. the panel which will be presented for impact with an occupant when the airbag is inflated within a motor vehicle).

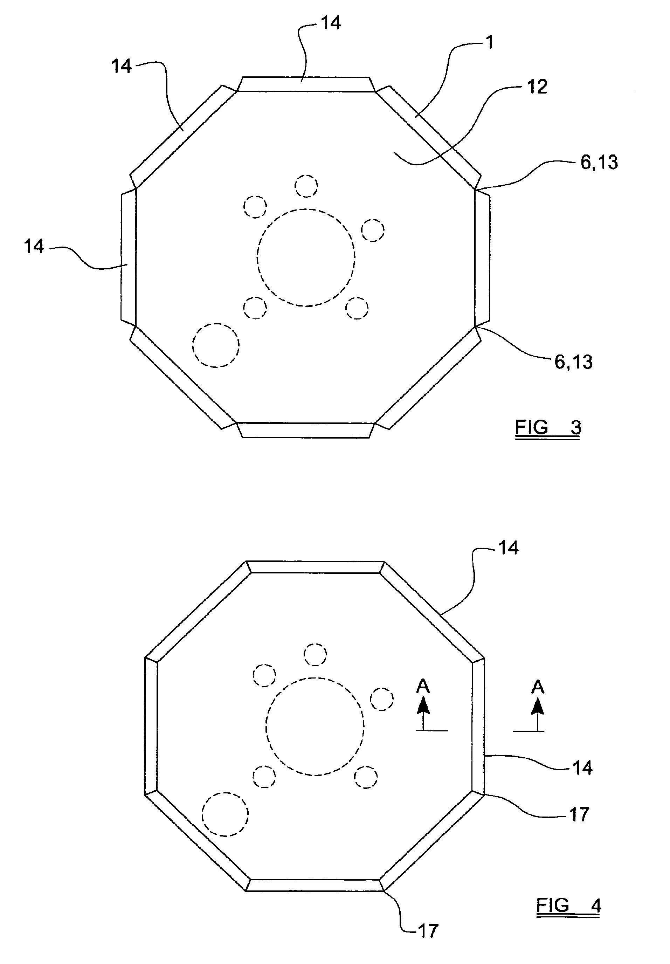

Figure 3 illustrates the front panel 12 having been superimposed on the rear panel 1 and aligned relative to the rear panel 1 such that each corner 13 of the front panel 12 is aligned with a respective apex 6 of the underlying rear panel 1. The front panel 12 thus covers the major extent of the rear panel 1, except for the eight edge-regions of the rear panel 1 which extend outwardly from beneath the front panel 12 as illustrated in figure 3. Each of the outwardly extending edge-regions thus defines a respective edge-flap 14.

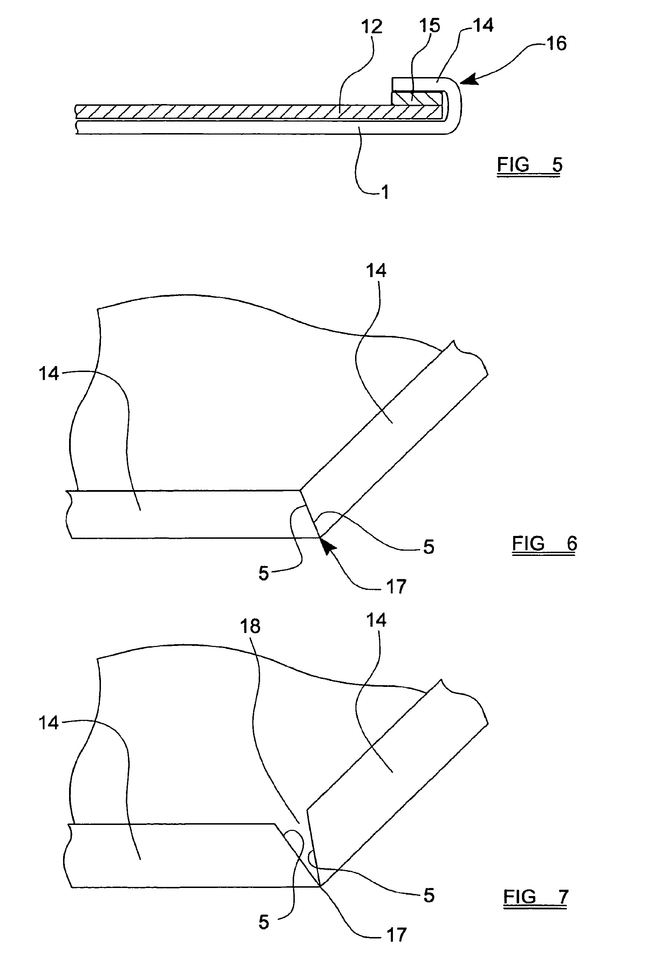

Figure 4 illustrates a subsequent stage during the fabrication of an airbag in accordance with the present invention, and shows the edge-flaps 14 of the rear panel 1 each having been folded over and against the adjacent edge-regions of the front panel 12. As illustrated in more detail in figure 5, a small strip of adhesive tape 15 is positioned between the edge-region of the front panel 12 and the folded over edge-flap 14 of the rear panel 1, the adhesive 15 thus serving to form an edge-seam 16 between the two layers 1,12. As illustrated in figure 5, each edge-seam 16 takes the form of a lap-joint formed between an edge-region of the front panel 12 and a respective edge-flap 14 of the rear panel 1, the edge-flap 14 being folded over the edge-region of the front panel 12.

Whilst it is envisaged that in some embodiments the simple provision of the adhesive tape 15 will be sufficient to define a good seam 16, it is also proposed that the edge-seams 16 are each completed by the application of heat in the region of the seams 16. Alternatively, it is envisaged that the edge-seams 16 could be created by the application of ultrasonic energy in the region of the seams 16, either in the presence or absence of the adhesive 15.

As illustrated most clearly in figure 6, but also in figure 4, by virtue of the re-entrant recesses 4 initially cut in the rear panel 1, the end edges 5 of adjacent folded over edge-flaps 14 lie immediately adjacent one another, with the result that adjacent edge-flaps 14 thus abut one another.

Figure 7, which corresponds generally to figure 6, illustrates the corner region of an airbag formed from a rear panel having slightly wider recesses 4 at its corners, in the sense that the edges 5 of each recess 4 make an angle of greater than 90° relative to one another. It will thus be seen from figure 7 that in such an arrangement, the edges 5 which define the ends of the adjacent edge-flaps 14 thus diverge from the extreme corner 17 of the airbag. This configuration thus provides a small gap 18 between adjacent edge-flaps 14.

It should therefore be appreciated that in the arrangement of figure 6 and in the arrangement of figure 7, the provision of the recesses 14 in the rear panel 1 ensures that when the edge-flaps 14 are folded over and sealed against the edge-regions of the front panel 12, at no point do neighbouring edge-flaps 14 overlap to create a region having three layers of film material (i.e. one layer defined by the edge-region of the front panel 12 and one layer defined by the end part of one edge-flap 14, and another layer defined by the overlapping adjacent edge-flap 14). This is important because the airbag in accordance with the present invention avoids the need to have overlapping edge-flaps 14 in the region of each corner 17 which would be the case if the recesses 4 were not provided at the corners of the rear panel 1. The airbag of the present invention is thus significantly thinner in the region of the corners 17, which makes the airbag lighter and allows the airbag to be folded into a smaller package than would be the case if neighbouring edge-flaps 14 overlapped with one another at respective corners of the airbag.

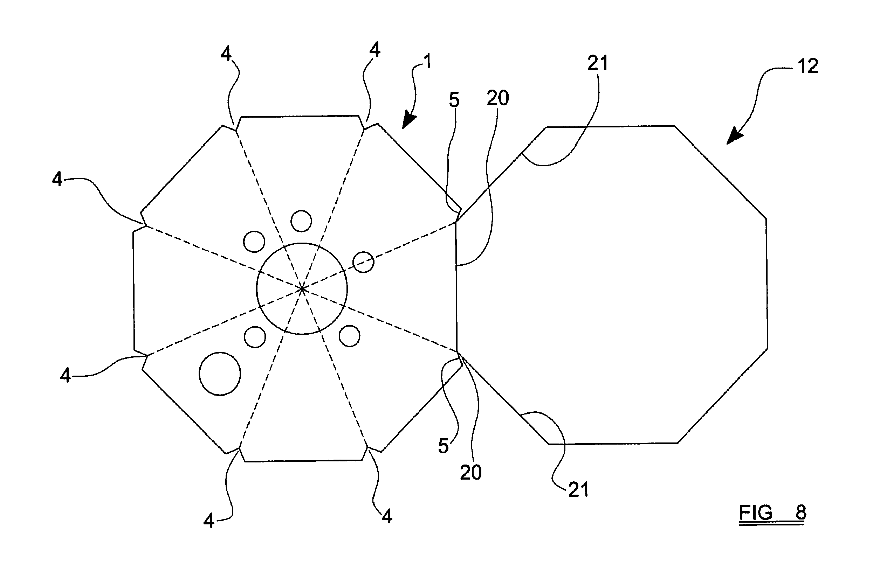

As will be appreciated, the invention has been described above with reference to an embodiment in which the layer of fabric defining the rear panel 1 and the layer of fabric defining the front panel 12 are each formed separately. However, it is also possible to form the front and rear panels from a single sheet of flexible material, as will now be described with reference to figures 8 to 10.

Figure 8 illustrates the front and rear panels formed integrally with one another, and having been cut as a single piece from a sheet of suitable flexible material. The rear panel 1 and the front panel 12 are effectively joined by an interconnecting straight edge-region 19, but in other respects both panels are substantially identical to the ones used and described above in the context of figures 1 to 7. For example, the front panel 12 thus still takes the form of a regular octagon, and the rear panel 1 takes the form of a substantially regular octagon having recesses 4 cut from its six free corners. In the region where the front panel 12 and the rear panel 1 are interconnected, somewhat smaller recesses 20 are cut, each recess 20 preferably having an angular extent of approximately 22.5° between the adjacent edge 21 of the front panel 12 and the end edge 5 of the adjacent side flap 14.

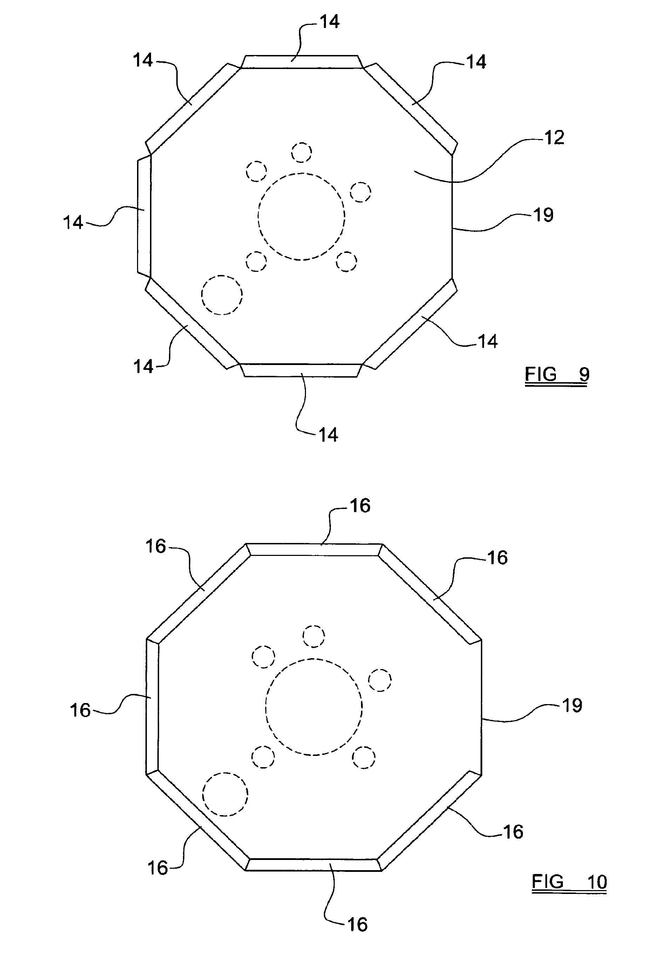

Figure 9 illustrates the front panel 12 having been folded relative to the rear panel 1, about the interconnecting edge 19, so as to overlie the rear panel 1. The seven edge-flaps 14 thus extend outwardly from beneath the front panel 12 in a substantially identical manner to that illustrated in figure 3, the only difference being that one of the edge-flaps 14 is missing, having been replaced by the interconnecting fold defined by the edge 19.

As will be appreciated, the seven edge-flaps 14 may then be folded over and against the adjacent edge-regions of the front panel 12 in a substantially identical manner to that illustrated and described above in the context of figure 5. The resulting airbag thus has the configuration illustrated in figure 10 and comprises seven edge-seams 16 serving to interconnect the front and rear panels, and a single fold 19 interconnecting the front and rear panels in the absence of the eighth edge-flap 14.

It should also be appreciated that whilst the invention has been described above in the context of airbags comprising substantially regular octagonal front and rear panels, the invention may apply equally to airbags having front and rear panels of other polygonal shapes. For example, the front and rear panels could be hexagonal or pentagonal, and could be either regularly shaped or irregularly shaped.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the spirit and scope of the invention.

When used in this specification and claims, the terms "comprises" and "comprising" and variations thereof mean that the specified features, steps or integers are included. The terms are not to be interpreted to exclude the presence of other features, steps or components.

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

## Claims

1. An airbag made from two superimposed layers (1,12) of flexible material, said layers being substantially polygonal in shape and being secured to one another by a plurality of edge-seams (16), each said seam (16) comprising a lap-joint formed between an edge-region of one of said layers (12) and a respective edge-flap (14) of the other layer (1) folded over said edge-region, wherein adjacent edge-flaps (14) do not overlap.

2. An airbag according to claim 1, wherein a gap (18) is provided between adjacent said edge-flaps (14).

3. An airbag according to claim 1, wherein adjacent edge-flaps (14) substantially abut one another.

4. An airbag according to any preceding claim, wherein adjacent edge-seams (16) do not overlap.

5. An airbag according to any preceding claim, wherein said edge-flaps (14) are all provided on the same said layer (1).

6. An airbag according to any preceding claim, wherein said flexible material comprises a plastic film.

7. An airbag according to any preceding claim, wherein said flexible material comprises a cross-ply laminate.

8. An airbag according to any preceding claim, wherein said flexible material comprises polyamide fibres within a polyurethane dispersion.

9. An airbag according to any preceding claim, wherein each said edge-seam (16) comprises an adhesive bond (15) formed between said edge-regions and said edge-flaps (14).

10. An airbag according to claim 9, wherein said adhesive bond is formed by a strip of adhesive tape (15).

11. An airbag according to claim 9 or claim 10, wherein each said edge-seam (16) is formed by the application of heat and/or pressure to said adhesive (15).

12. An airbag according to any preceding claim, wherein each said seam (16) is formed ultrasonically.

13. An airbag according to any preceding claim, wherein each said layer (1,12) is formed from a separate sheet of said flexible material, there being a respective said edge-seam (16) interconnecting said two sheets (1,12) along each edge thereof.

14. An airbag according to any one of claims 1 to 12, wherein said layers (1,12) are both formed from a single sheet of flexible material, said sheet being folded about a fold line (19) to superimpose said layers (1,12), said fold line (19) forming one edge of the airbag, and the two layers (1,12) being interconnected along each other edge by a respective said edge-seam (16).
